# EUROPEAN PATENT APPLICATION

(11) **EP 3 029 605 A2**
(43) Date of publication of application: **08.06.2016**
(21) Application number: 15197234.6
(22) Date of filing: 01.12.2015
(51) Int. Cl.: G06K 9/32

(54) **MARKER RECOGNITION DEVICE, MARKER RECOGNITION METHOD, AND RECOGNITION PROGRAM**

(30) Priority: 02.12.2014 JP 2014244312
(71) Applicant: Toyota Jidosha Kabushiki Kaisha, Toyota-shi, Aichi 471-8571 (JP)
(72) Inventor: KOBORI, Norimasa, Toyota-shi,, Aichi 471-8571 (JP)
(74) Representative: TBK

(57) **Abstract**

A marker recognition device (1) includes: an image acquisition unit (2) that acquires an image including a marker having a predetermined feature value; a detection unit (3) that generates scale-space image groups by applying a disturbance to the image including the marker acquired by the image acquisition unit, and detects a key point in the image including the marker by detecting the predetermined feature value based on a difference between the generated scale-space image groups; and a recognition unit (4) that recognizes a position of the marker based on the key point detected by the detection unit.

## Description

### BACKGROUND OF THE INVENTION

### 1. Field of the Invention

The present invention relates to a marker recognition device, a marker recognition method, and a recognition program which recognize a marker attached to an item or the like.

### 2. Description of Related Art

A two-dimensional reading device that reads a two-dimensional code, such as QR code®, is known (see, for example, Japanese Unexamined Patent Application Publication No. 2009-295145).

In the two-dimensional code reading device, the appearance of the two-dimensional code changes depending on the direction from which the two-dimensional code is read. For example, in the case of recognizing a marker or the like, the recognition accuracy may deteriorate depending on the appearance of the marker.

### SUMMARY OF THE INVENTION

The present invention has been made to solve the above-mentioned problem, and a principal object of the present invention is to provide a marker recognition device, a marker recognition method, and a recognition program which are capable of recognizing a marker with a high accuracy, regardless of the appearance of the marker.

In order to achieve the above-mentioned object, a first exemplary aspect of the present invention is a marker recognition device including: an image acquisition unit that acquires an image including a marker having a predetermined feature value; a detection unit that generates scale-space image groups by applying a disturbance to the image including the marker acquired by the image acquisition unit, and detects a key point in the image including the marker by detecting the predetermined feature value based on a difference between the generated scale-space image groups; and a recognition unit that recognizes a position of the marker based on the key point detected by the detection unit.

In the first exemplary aspect, the recognition unit may recognize a size of the marker based on a scale corresponding to the key point detected by the detection unit.

In the first exemplary aspect, the marker may include a circular shape.

In the first exemplary aspect, an outline of the circular shape may be formed in a first color; a code image including code information may be formed in a color different from the first color; and the code image may be superimposed on a marker image including the circular shape.

In the first exemplary aspect, the circular shape may be a concentric circular shape.

In the first exemplary aspect, the detection unit may detect a plurality of key points, and the recognition unit may determine, according to scales of the key points, whether or not a marker is present at positions of the key points detected by the detection unit, and recognize a position and a size of the marker based on the scales of the key points and the positions of the key points where the marker on which the determination is made is present.

In the first exemplary aspect, the marker may include a circular shape, and the recognition unit may perform a search according to the scales in the vicinity of the key points detected by the detection unit, calculate a correlation value of a line width ratio of the circular shape, determine that the marker is present at a position where the correlation value is equal to or greater than a predetermined value, and recognize a position and a size of the marker based on the scales of the key points and the positions of the key points where the marker on which the determination is made is present.

In order to achieve the above-mentioned object, a second exemplary aspect of the present invention may be a marker recognition method including the steps of: acquiring an image including a marker having a predetermined feature value; generating scale-space image groups by applying a disturbance to the image including the marker, and detecting a key point in the image including the marker by detecting the predetermined feature value based on a difference between the generated scale-space image groups; and recognizing a position of the marker based on the detected key point.

In other to achieve the above-mentioned object, a third exemplary aspect of the present invention may be a recognition program for causing a computer to execute processing including: acquiring an image including a marker having a predetermined feature value; generating scale-space image groups by applying a disturbance to the acquired image including the marker, and detecting a key point in the image including the marker by detecting the predetermined feature value based on a difference between the generated scale-space image groups; and recognizing a position of the marker based on the detected key point.

According to the present invention, it is possible to provide a marker recognition device, a marker recognition method, and a recognition program which are capable of recognizing a marker with a high accuracy, regardless of the appearance of the marker.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig. 1 is a block diagram showing a schematic system configuration of a marker recognition device according to a first exemplary embodiment;
Fig. 2 is a diagram showing an example of a smoothed image group and a difference image group;
Fig. 3 is a diagram showing an example of pixels serving as key points;
Fig. 4 is a diagram showing an example of a double circular shape of a marker;
Fig. 5 is a flowchart showing a processing flow of a marker recognition method according to the first exemplary embodiment;
Fig. 6 is a diagram showing an example of a circular shape of a marker;
Fig. 7 is a diagram showing an example of a circular shape on each scale;
Fig. 8 shows photographs illustrating marker detection results when photographing is performed at a distance of 1 m;
Fig. 9 shows photographs illustrating marker detection results when photographing is performed at a distance of 2 m;
Fig. 10 shows photographs illustrating examples of appearance states of key points at distances of 1 m and 2 m, respectively; and
Fig. 11 is a diagram for explaining a method of generating a superimposed image by superimposing a code image on a double circular marker image.

### DESCRIPTION OF THE EXEMPLARY EMBODIMENTS

### First Exemplary Embodiment

Exemplary embodiments of the present invention will be described below with reference to the drawings.

A marker recognition device according to a first exemplary embodiment of the present invention is mounted in, for example, a robot, and a marker is attached to an item on which the robot performs an operation. The marker recognition device recognizes the position of the marker, thereby making it possible to recognize the position, posture, distance, and the like of the item. In particular, a humanoid robot or the like performs a complex operation and observes a marker of an item from different directions and distances, so that the appearance of the marker varies greatly. The marker recognition device according to the first exemplary embodiment can constantly recognize a marker with a high accuracy even when the appearance of the marker varies.

The marker is designed so as to include, for example, an SIFT (Scale-Invariant Feature Transform) feature value. The marker is designed so as to include, for example, an SIFT feature value in the center thereof. The SIFT feature value is a predetermined feature value that is robust against a disturbance such as a translational motion, a rotation, scaling, or an illumination change.

Note that the marker is designed so as to include an SIFT feature value, but the design of the marker is not limited to this. The marker may be designed so as to include, for example, an SURF (Speed-Up Robust Features) feature value, or any feature values that are robust against a translational motion, a rotation, scaling, an illumination change, or the like.

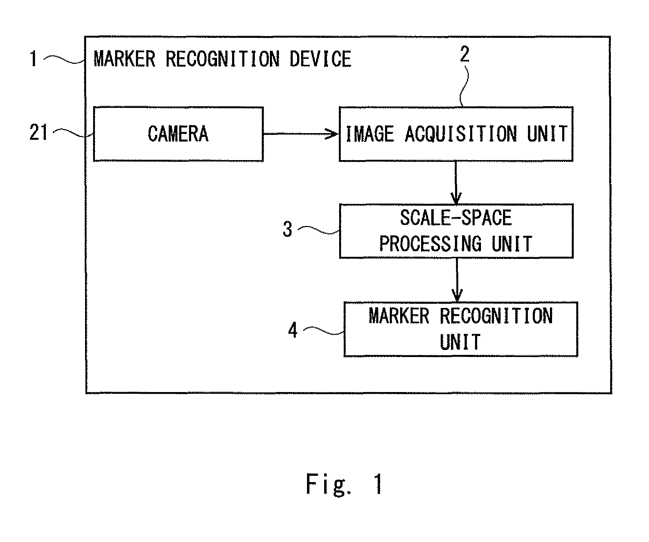

Fig. 1 is a block diagram showing a schematic system configuration of the marker recognition device according to the first exemplary embodiment of the present invention. A marker recognition device 1 according to the first exemplary embodiment includes an image acquisition unit 2 that acquires an image of a marker (marker image); a scale-space processing unit 3 that performs processing based on the marker image; and a marker recognition unit 4 that recognizes the marker.

The marker recognition device 1 is composed of hardware based on a microcomputer including, for example, a CPU (Central Processing Unit) that performs arithmetic processing and the like; a memory that is composed of a ROM (Read Only Memory) or a RAM (Random Access Memory) and stores an operation program, a control program, and the like which are executed by the CPU; and an interface unit (I/F) that inputs signals from the outside and outputs signals to the outside. The CPU, the memory, and the interface unit are connected to each other via a data bus or the like.

The image acquisition unit 2 is a specific example of image acquisition means. For example, the image acquisition unit 2 takes an image of a marker, which is attached to an item or the like, by using a camera 21, thereby acquiring the image of the marker. The image acquisition unit 2 outputs the acquired marker image to the scale-space processing unit 3.

The scale-space processing unit 3 is a specific example of detection means, and detects SIFT key points (SIFT-Localization) by performing scale-space processing as described below on the marker image output from the image acquisition unit 2. Note that the key points have such a property that each key point is liable to appear at the same position even when, for example, the marker image undergoes a translational motion, a rotation, scaling, or an illumination change.

The scale-space processing unit 3 first generates a plurality of smoothed image groups (scale-space image groups) by multiplying Gaussian functions with different scales by the marker image. The scale-space processing unit 3 generates difference image groups (DoG (Difference-of-Gaussian) images) each indicating a difference between the generated smoothed image groups.

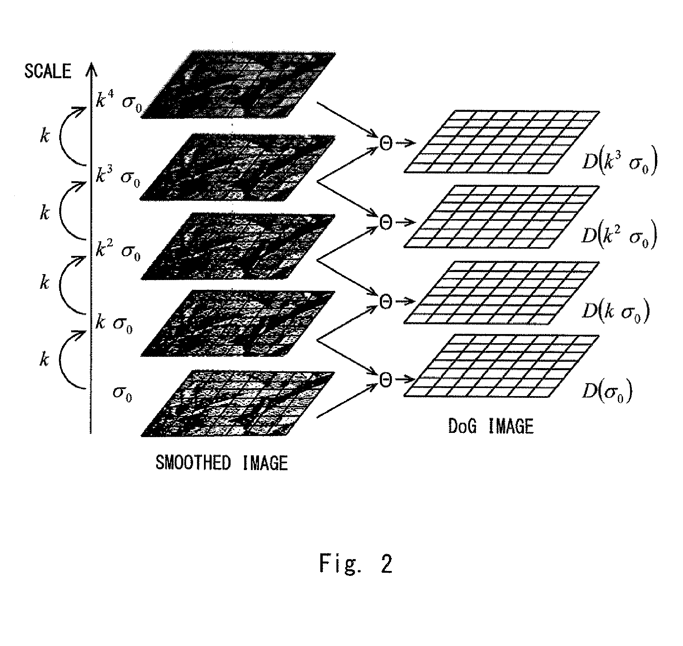

For example, as shown in Fig. 2, the scale-space processing unit 3 generates a plurality of smoothed image groups by multiplying Gaussian functions (σ₀, kσ₀, k²σ₀, k³σ₀, and k⁴σ₀) with different scales by each marker image. The scale-space processing unit 3 generates difference image groups (D (σ₀), D (kσ₀), D (k²σ₀), and D (k³σ₀)) each indicating a difference between the generated smoothed image groups.

The scale-space processing unit 3 multiplies Gaussian functions with different scales by each marker image (i.e., applies a Gaussian blur), to thereby generate a plurality of smoothed image groups. However, the operation of the scale-space processing unit 3 is not limited to this. The scale-space processing unit 3 may generate a plurality of smoothed image groups by applying a disturbance other than a Gaussian blur (for example, a change such as an approximation of a Gaussian function, or a change in color tone) to the marker image.

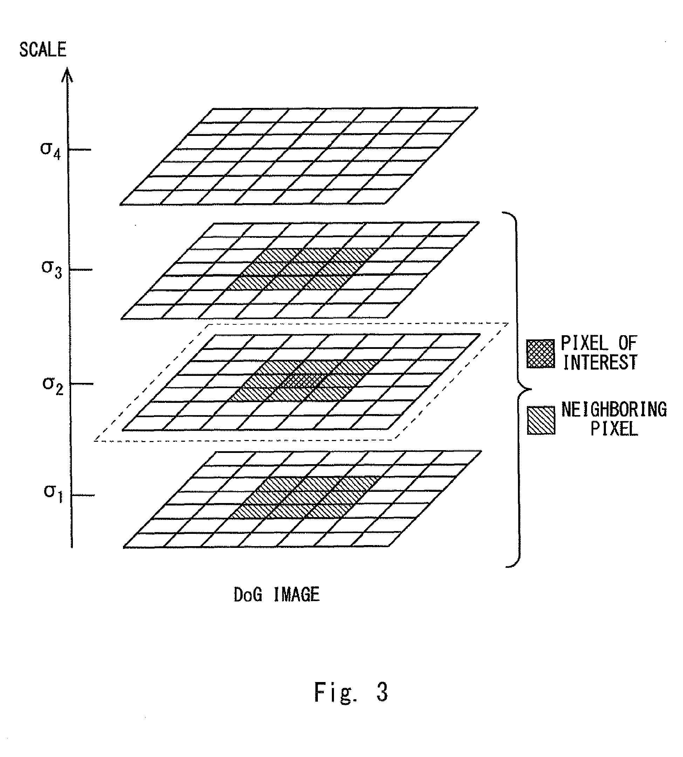

The scale-space processing unit 3 determines, as a key point, a position indicating an extreme value (minimum or maximum) in the generated difference image groups, and detects the key point as a center point of the SIFT. For example, the scale-space processing unit 3 selects three successive difference images with different scales as shown in Fig. 3. Further, the scale-space processing unit 3 compares 26 neighboring pixels in the vicinity of a pixel of interest in the selected difference images, and detects a pixel having an extreme value as a key point. The scale-space processing unit 3 outputs the position of the detected key point to the marker recognition unit 4.

The marker recognition unit 4 is a specific example of recognition means, and recognizes the position of the marker based on the position of the key point output from the scale-space processing unit 3. The key point of the marker image is unlikely to change even when the marker undergoes a translational motion, a rotation, scaling, an illumination change, or the like. Thus, the position of the marker is recognized based on the position of the key point of the marker image, thereby making it possible to accurately recognize the position of the marker, regardless of the layout (direction, scale) of the marker. In other words, the marker can be recognized with a high accuracy, regardless of the appearance of the marker.

The marker recognition unit 4 determines the position of the key point output from the scale-space processing unit 3 to be the position of the marker. In this case, the marker includes an SIFT feature value as described above. Accordingly, the scale-space processing unit 3 detects a key point at a position where the marker is actually present, but may also detect a key point at a position other than the position of the marker.

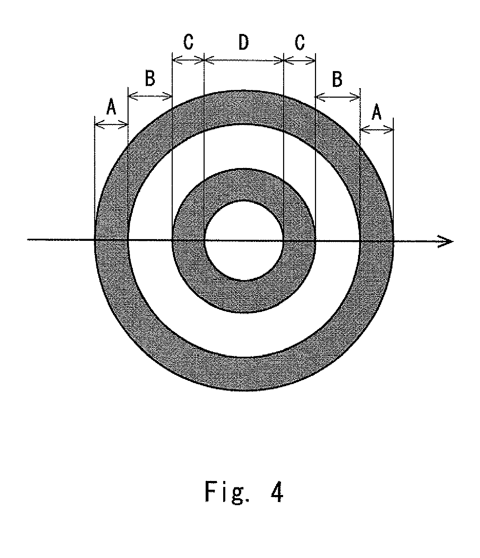

On the other hand, the marker recognition unit 4 determines whether or not the marker is present at the position of each key point output from the scale-space processing unit 3. For example, assume a case where the marker includes a feature value indicating a double circular shape (Fig. 4). The marker recognition unit 4 determines whether or not the double circle of the marker is present, according to the scale of each key point at the position of each key point. More specifically, the marker recognition unit 4 calculates a correlation value of a line width ratio (for example, A:B:C:D:C:B:A) of the double circular shape. The line width ratio of the double circular shape does not change even when, for example, the marker is inclined and the double circular shape becomes an ellipse. Accordingly, the marker recognition unit 4 performs a search according to the scale in the vicinity of each key point, and determines that the double circular shape of the marker is present at a position where the correlation value of the line width ratio of the double circular shape is high (i.e., the correlation value is equal to or greater than a predetermined value). Further, the marker recognition unit 4 recognizes the position of the marker based on the position of each key point where the marker on which the determination is made is present and the scale of the key point.

Furthermore, the size of the marker image is determined by the scale (Gaussian function) corresponding to the key point. Accordingly, the marker recognition unit 4 can recognize the size of the marker based on the scale corresponding to the key point detected by the scale-space processing unit 3. For example, the marker recognition unit 4 recognizes, as the size of the marker, the scale of the key point present in the marker on which the determination is made. Thus, the size of the marker as well as the position of the marker can be recognized at the same time by recognizing the key point of the marker image.

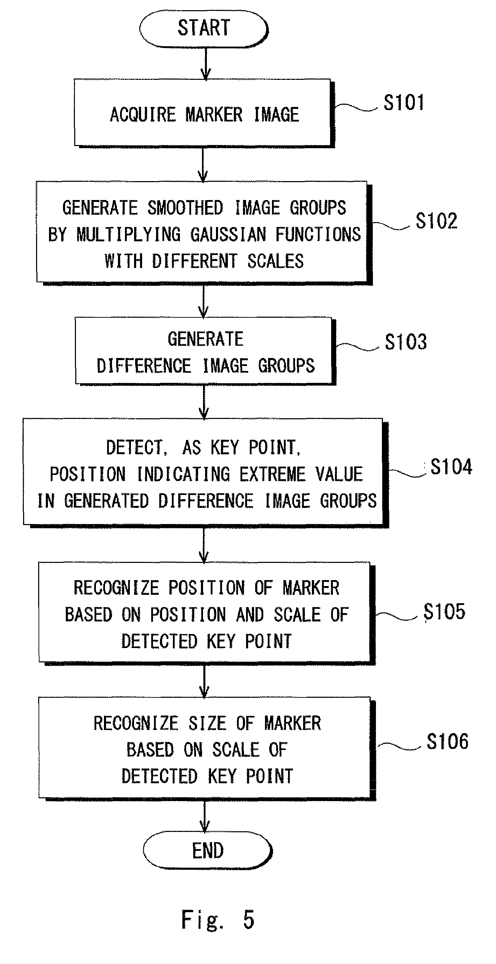

Fig. 5 is a flowchart showing a processing flow of a marker recognition method according to the first exemplary embodiment. The image acquisition unit 2 takes an image of a marker, which is attached to an item or the like, by using the camera 21, thereby acquiring the image of the marker (step S101). The image acquisition unit 2 outputs the acquired marker image to the scale-space processing unit 3.

The scale-space processing unit 3 generates smoothed image groups by multiplying Gaussian functions with different scales by the maker image output from the image acquisition unit 2 (step S102). The scale-space processing unit 3 generates difference image groups each indicating a difference between the generated smoothed image groups (step S103). The scale-space processing unit 3 detects, as a key point, a position indicating an extreme value in the generated difference image groups (step S104). The scale-space processing unit 3 outputs the position of the detected key point to the marker recognition unit 4.

The marker recognition unit 4 recognizes the position of the marker based on the position and scale of the key point output from the scale-space processing unit 3 (step S105). Further, the marker recognition unit 4 recognizes the size of the marker based on the scale of the key point output from the scale-space processing unit 3 (step S106).

As described above, the marker recognition device 1 according to the first exemplary embodiment generates a plurality of scale-space image groups by applying a disturbance to the image of the marker, and detects a key point as a feature point of the marker image based on a difference between the generated scale-space image groups. Further, the marker recognition device 1 recognizes the position of the marker based on the detected key point. Since the marker includes a predetermined feature value that is robust against a disturbance (appearance), a key point robust against a disturbance appears in the marker. By recognizing the position of this key point, it is possible to recognize the position of the marker with a high accuracy. In other words, the marker can be recognized with a high accuracy, regardless of the appearance of the marker.

### Second Exemplary Embodiment

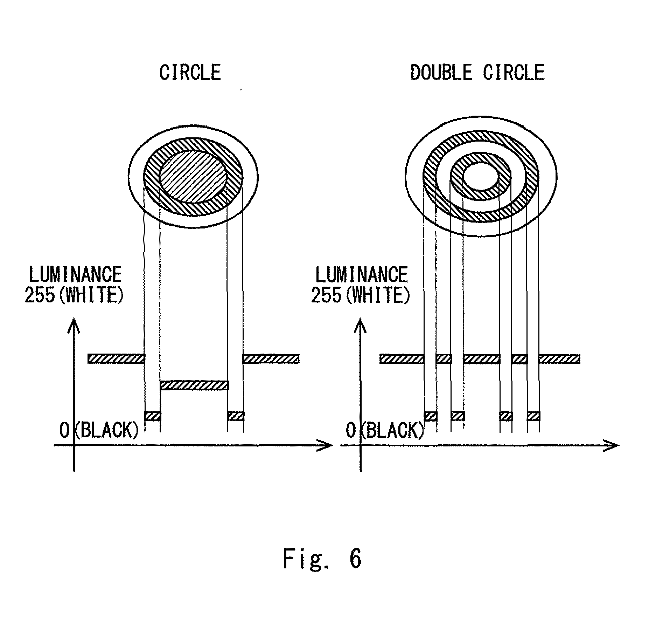

A second exemplary embodiment of the present invention is characterized in that the pattern shape of a marker is designed so as to include a circular shape. For example, the pattern shape of the marker includes a circular shape, such as a circle or a double circle, which includes a portion (luminance depression) in which the luminance is lower than that in surrounding areas as shown in Fig. 6. More specifically, when the pattern shape of the marker is a circular shape, a gray-scale image in which the luminance of an outline portion that defines the circular shape is low is obtained.

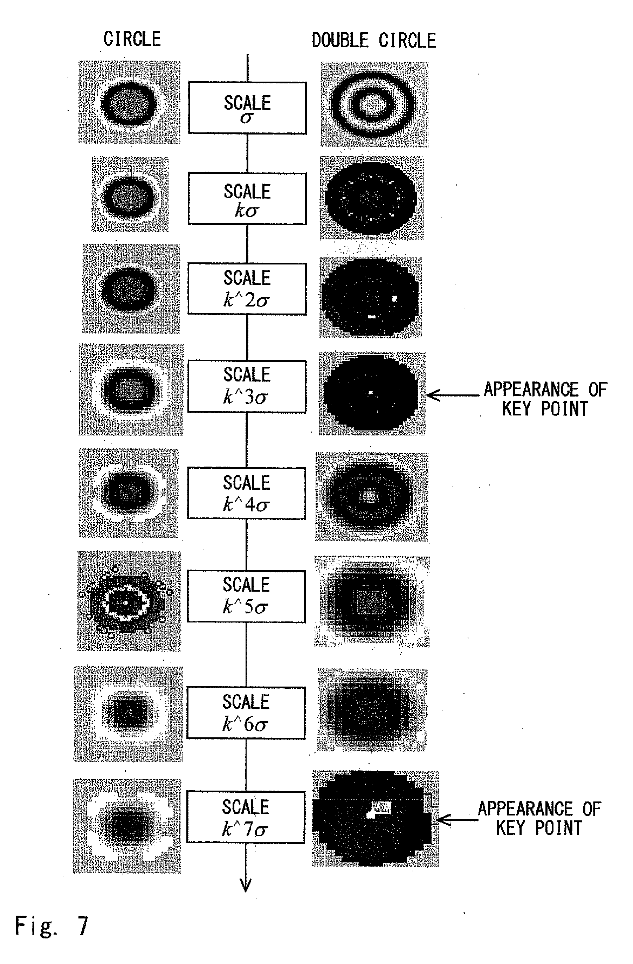

The circular shape is robust against a rotation, an inclination, or the like. Further, when the circular shape is a concentric circular shape, a key point appears a plurality of times in a scale change. For example, in the case of a double circle, a key point appears twice in a scale change (Fig. 7). Accordingly, the double circular shape is more robust against a rotation, an inclination, or the like. The scale-space processing unit 3 detects a key point of the SIFT feature value by performing scale-space processing on the marker image output from the image acquisition unit 2. At this time, the circular shape of the marker is robust against a rotation, an inclination, or the like as mentioned above. Thus, the scale-space processing unit 3 detects this circular shape as a key point.

The pattern shape of the marker is designed so as to include a circular shape, but the design of the pattern shape is not limited to this. The pattern shape of the marker may be a polygon, such as a quadrangle, or may be a line-symmetric shape or a point-symmetric shape. Also in this case, the pattern shape is more robust against a rotation, an inclination, or the like. Note that a circular shape is most robust against a rotation, an inclination, or the like, and thus the circular shape is more preferably used to design the pattern shape of the marker.

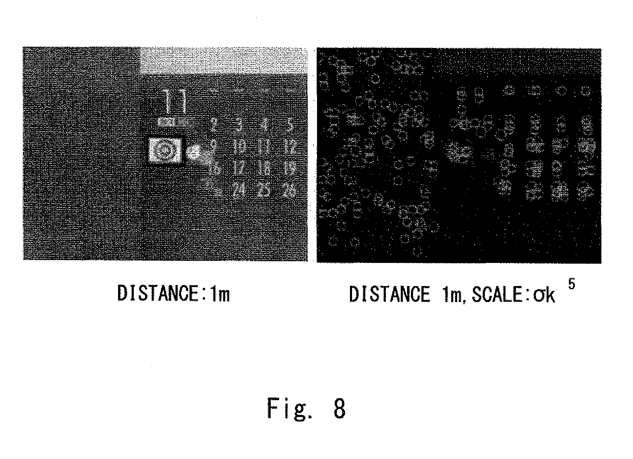

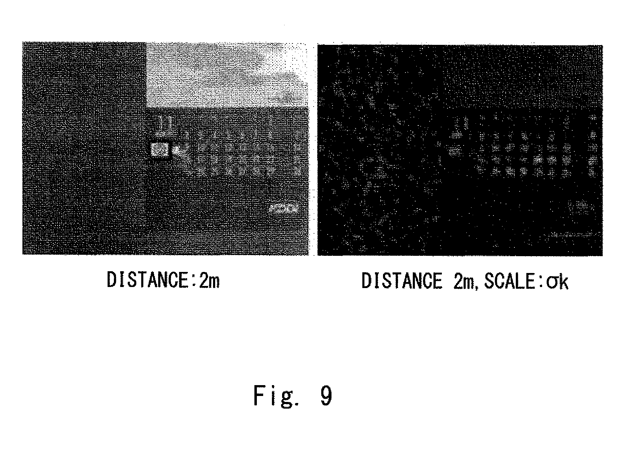

Next, results of experiments in which the marker recognition according to the second exemplary embodiment was performed will be described. Markers each having a size of 17×23 mm (including a circular luminance depression) were created by, for example, printing stickers using a commercially available printer, and the created markers were disposed on a wall. The markers were disposed at distances of 1 m and 2 m, respectively, from the camera of the marker recognition device 1. The focal length of the camera was set to a position at a distance of 1 m from the camera. At a position at a distance of 2 m from the camera, photographing was performed without changing the focal length of the camera. Fig. 8 shows photographs illustrating marker detection results when photographing was performed at a distance of 1 m. Fig. 9 shows photographs illustrating marker detection results when photographing was performed at a distance of 2 m.

As seen from Fig. 8, at a distance of 1 m, a key point of the marker can be detected at a scale of σk⁵. As seen from Fig. 9, at a distance of 2 m, a key point of the marker can be detected at a scale of σk.

In this case, the size of camera images is VGA (640×480). Accordingly, the area occupancy of the marker photographed at a distance of 1 m was 1.1%. The area occupancy of the marker photographed at a distance of 2 m was 0.31%. On the other hand, the area occupancy of the marker obtained when the marker detection is performed in a similar manner using conventional Chameleon Code is 0.6%. Thus, it is obvious that the marker recognition device 1 according to this exemplary embodiment is capable of recognizing a marker having a smaller area occupancy and has higher recognition performance in comparison to a conventional one.

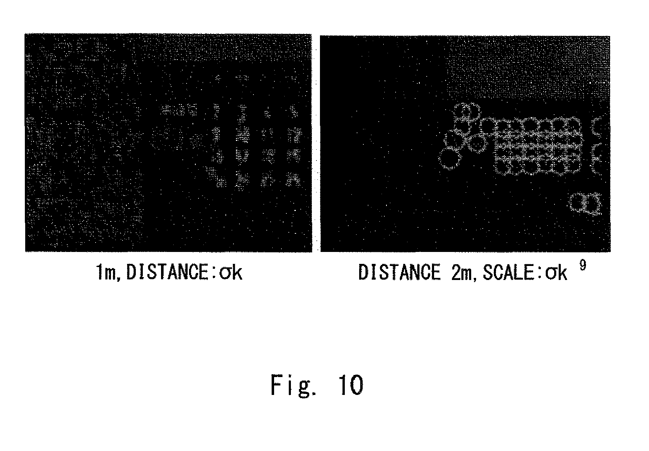

As seen from Figs. 8 and 9, key points also appear at positions other than the position of the marker. It is also found that key points appear at different positions depending on the scale. In Fig. 10, the circular shape of the marker represents the size of the scale itself. When the scale is small (σk) as shown in Fig. 10, it is apparent that key points appear in the texture of the wall. When the scale is large (σk⁹) as shown in Fig. 10, it is apparent that key points appear at positions respectively corresponding to the characters in the calendar. The number of key points detected at a distance of 2 m is represented by a score of 3680 points in a first octave, a score of 866 points in a second octave, and a score of 457 points in a third octave, and the total score is 5003 points. The number of pixels in VGA is represented by a score of 307200 points. Thus, it is apparent that the number of search points is reduced to one-sixth.

The marker as described above is attached to an item or the like on which a robot performs an operation, and is recognized. Since a robot manipulates various items, a degree of freedom of the layout and distance of the maker and the focal length is required. Furthermore, when the robot works in an environment in which the degree of freedom is high, it is difficult to know in advance where the items are present. Under such an environment, a large amount of information about the marker, as well as ease of recognition of the marker and how small the marker is are especially important.

According to the marker including the double circular shape of the second exemplary embodiment, even a marker having an area occupancy of 0.31% can be recognized as shown in the experimental results. Thus, it is apparent that even such a small marker can be recognized accurately and easily.

### Third Exemplary Embodiment

In a third exemplary embodiment of the present invention, a code image including code information is superimposed on the circular shape of the marker image according to the second exemplary embodiment, thereby generating a superimposed image. This enables the recognition of the code information, as well as the recognition of the position and size of the marker.

In this case, if the code image is merely superimposed on the circular shape of the marker image, there is a possibility that the circular luminance depression will disappear due to the superimposed code image.

On the other hand, in the superimposed image according to the third exemplary embodiment, for example, the circular shape of the marker image is generated using one of RGB (red, green, and blue) components, and the code image is generated using the other components.

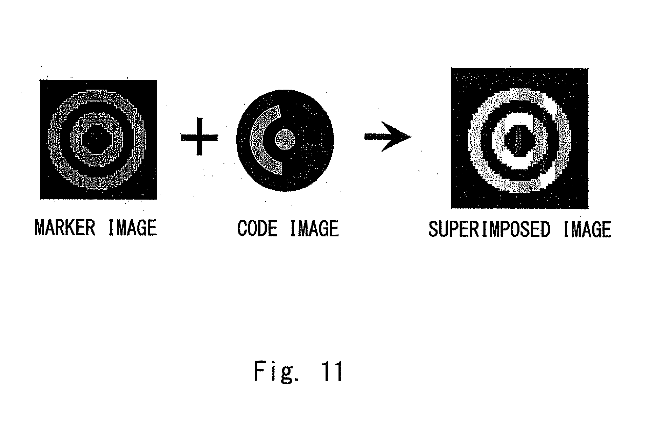

More specifically, when the circular shape of the marker image is a double circular shape as shown in Fig. 11, an outline portion that defines the double circular shape is formed using the G (green) component, and the code image is formed using the R (red) and B (blue) components. Further, the code image formed using the R and B components is superimposed on the marker image of the double circular shape, which is formed using the G component, thereby generating the superimposed image. This allows the code image to be superimposed while preventing the circular luminance depression from disappearing in the circular shape of the marker image. Note that the superimposed image may be generated by superimposing the code image using any one of the RGB components on the circular shape of the marker image formed by the gray scale. For example, the circular shape of the marker image is formed by adjusting the luminance gradient according to the gray scale. Further, the code image is formed using the R component in the circular shape of the marker image. The luminance of the circular shape is adjusted using a hue circle or the like so that the luminance becomes constant. Furthermore, the G component is added in the circle to thereby adjust the luminance so that the luminance becomes uniform. This prevents occurrence of luminance unevenness in the circle due to the code image.

The present invention is not limited to the above exemplary embodiments, and can be modified as appropriate without departing from the scope of the invention.

According to the present invention, the processing shown in Fig. 6, for example, can also be implemented by causing a CPU to execute a computer program.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.).

The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

A marker recognition device includes: an image acquisition unit that acquires an image including a marker having a predetermined feature value; a detection unit that generates scale-space image groups by applying a disturbance to the image including the marker acquired by the image acquisition unit, and detects a key point in the image including the marker by detecting the predetermined feature value based on a difference between the generated scale-space image groups; and a recognition unit that recognizes a position of the marker based on the key point detected by the detection unit.

## Claims

1. A marker recognition device (1) comprising:
image acquisition means (2) for acquiring an image including a marker having a predetermined feature value;
detection means (3) for generating scale-space image groups by applying a disturbance to the image including the marker acquired by the image acquisition means (2), and for detecting a key point in the image including the marker by detecting the predetermined feature value based on a difference between the generated scale-space image groups; and
recognition means (4) for determining whether or not a marker is present at a position of the key point detected by the detection means (3), and for recognizing a position of the marker based on the position of the key point where the marker is present, the key point being detected by the detection means (3).

2. The marker recognition device according to Claim 1, wherein the recognition means (4) recognizes a size of the marker based on a scale corresponding to the key point detected by the detection means (3).

3. The marker recognition device according to Claim 1 or 2, wherein the marker includes a circular shape.

4. The marker recognition device according to Claim 3, wherein
an outline of the circular shape is formed in a first color,
a code image including code information is formed in a color different from the first color, and
the code image is superimposed on a marker image including the circular shape.

5. The marker recognition device according to Claim 3 or 4, wherein the circular shape is a concentric circular shape.

6. The marker recognition device according to any one of Claims 1 to 5, wherein
the detection means (3) detects a plurality of key points, and
the recognition means (4) determines, according to scales of the key points, whether or not a marker is present at positions of the key points detected by the detection means, and recognizes a position and a size of the marker based on the scales of the key points and the positions of the key points where the marker on which the determination is made is present.

7. The marker recognition device according to Claim 6, wherein
the marker includes a circular shape, and
the recognition means (4) performs a search according to the scales in the vicinity of the key points detected by the detection means (3), calculates a correlation value of a line width ratio of the circular shape, determines that the marker is present at a position where the correlation value is equal to or greater than a predetermined value, and recognizes a position and a size of the marker based on the scales of the key points and the positions of the key points where the marker on which the determination is made is present.

8. A marker recognition method comprising the steps of:
acquiring an image including a marker having a predetermined feature value;
generating scale-space image groups by applying a disturbance to the image including the marker, and detecting a key point in the image including the marker by detecting the predetermined feature value based on a difference between the generated scale-space image groups; and
determining whether or not a marker is present at a position of the detected key point, and recognizing a position of the marker based on the position of the key point where the detected marker is present.

9. A non-transitory computer readable medium storing a recognition program for causing a computer to execute processing comprising:
acquiring an image including a marker having a predetermined feature value;
generating scale-space image groups by applying a disturbance to the image including the marker, and detecting a key point in the image including the marker by detecting the predetermined feature value based on a difference between the generated scale-space image groups; and
determining whether or not a marker is present at a position of the detected key point, and recognizing a position of the marker based on the position of the key point where the detected marker is present.
